Europäisches Patentamt

(19) European Patent Office

Office européen des brevets

(11) Publication number: **0 207 689 B1**

# EUROPEAN PATENT SPECIFICATION

(45) Date of publication of patent specification:
17.04.91 Bulletin 91/16

(51) Int. Cl.⁵: **H04N 5/76**

(21) Application number: **86304703.1**

(22) Date of filing: **18.06.86**

(54) **Disk player with blanking during fast scanning.**

(30) Priority: **18.06.85 JP 92036/85**

(43) Date of publication of application:
**07.01.87 Bulletin 87/02**

(45) Publication of the grant of the patent:
**17.04.91 Bulletin 91/16**

(84) Designated Contracting States:
**DE FR GB**

(56) References cited:
**DE-A- 2 207 039**
**DE-A- 3 031 466**
**DE-A- 3 151 545**
**DE-A- 3 248 377**

(73) Proprietor: **PIONEER ELECTRONIC CORPORATION**
**No. 4-1, Meguro 1-chome**
**Meguro-ku Tokyo 153 (JP)**

(72) Inventor: **Akiyama, Toru Pioneer Electronic Corporation**
**Tokorozawa Works No. 2610, Hanazono 4-chome**
**Tokorozawa-shi Saitama (JP)**

(74) Representative: **Brunner, Michael John et al**
**GILL JENNINGS & EVERY 53-64 Chancery Lane**
**London WC2A 1HN (GB)**

EP 0 207 689 B1

## Description

This invention relates to a disk player typically used for a video disk.

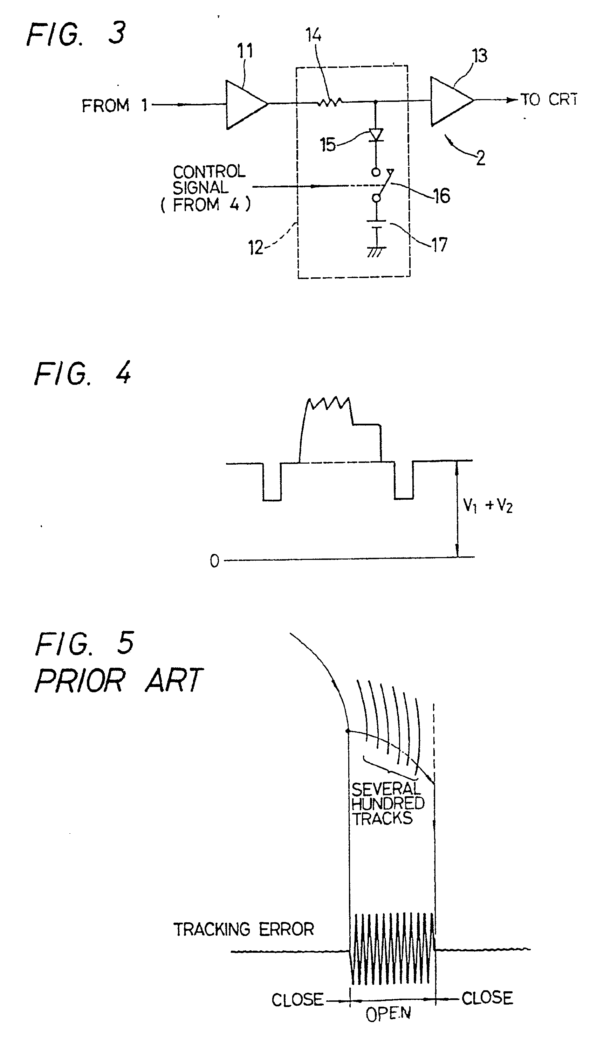

In the case of, for example, a video disk player, a desired picture sequence can be scanned in a fast mode while a playback image is viewed by moving a pickup in the radial direction of the disk at a speed higher than that at the time of normal playback. During the scanning, a tracking servo loop is set open for a fixed interval of time (e.g., between 5 to 10 ms) as shown in Fig. 5 and a pickup is moved in the radial direction of the disk at a speed higher than that at the time of normal playback to make the pick-up cross several hundred tracks. Then the tracking servo loop is closed at a subsequent fixed interval and the pickup is caused to follow the one track. Thereafter, the above operations are repeated.

If the above scanning is carried out in the conventional apparatus, the video signal, as it is, will be supplied to a CRT when the tracking servo loop is opened, as well as when the loop is closed. As a consequence, if the disk is, for example, a CLV (Constant Linear Velocity) disk, noise will appear on a picture plane because image data on tracks adjacent to each other are not correlated. The thus generated noise will spoil the view. When the locked picture plane with a fixed colour is scanned as proposed by the present inventors JP-A-60258936, the noice becomes conspicuous in particular and the disadvantage is that the commercial value of the operation is extremely reduced.

DE-A-3248377 discloses a blanking circuit for a disk player in which a squelch circuit maintains blanking of the signal during certain player transition operating modes, such as pause-to-play.

DE-A-3031466 discloses a squelch circuit for a disk player which, in response to control signals, mutes audio and video circuits.

Accordingly, an object of this invention is to eliminate the above described problem of noise in special scanning.

According to a first aspect of the present invention, a blanking circuit for a video disk player which performs special playback by moving a head in the radial direction of a video disk and causing the head to jump over a plurality of tracks, the circuit comprising a demodulating circuit for demodulating a received video signal ; an eliminating circuit for selectively eliminating image data contained in the demodulated video signal produced by the demodulating circuit ; and, control means for controlling the eliminating circuit to be inhibited when a first condition signal is applied to said eliminating circuit ; is characterised by : means for producing the first condition signal and thereby causing the eliminating circuit to be inhibited when a CAV disk, in which image data on adjacent tracks of the disk are correlated, is played back according to said special playback, the first condition signal not being produced and the eliminating circuit being activated when playing back a CLV disk, in which image data from adjacent tracks of the disk are not correlated.

According to a second aspect of the present invention, a method of blanking an image signal recorded on a video disk, comprising demodulating a video signal containing an image signal ; and, eliminating the image signal from the demodulated video signal in response to a first condition signal ; is characterised by :

determining when signals recorded on adjacent tracks of the disk are not correlated and when a head tracing the tracks is not under loop control ; and producing the first condition signal responsive to the determining step.

As a result, an image of good quality is obtained by preventing the transient jumping image signal from appearing on the picture plane in the form of noise.

In the drawings :

Fig. 1 is a block diagram of a disk player embodying the present invention ;

Figs. 2(a)-2(d) are waveform charts of the disk player of Fig. 1 ;

Fig. 3 is a circuit diagram of the eliminating circuit of Fig. 1 ;

Fig. 4 is a waveform chart of the eliminating circuit ; and,

Fig. 5 is an explanatory diagram illustrating scanning in a conventional apparatus and the waveform chart thereof.

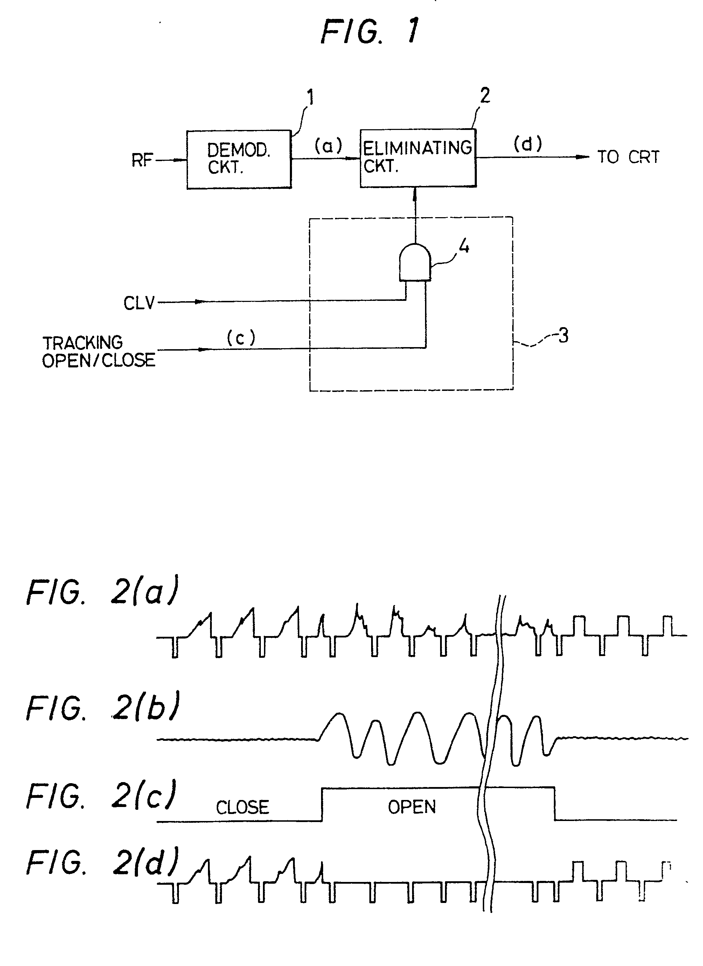

Fig. 1 is a block diagram of a disk player embodying the present invention. In Fig. 1, there is shown a circuit including a demodulating circuit 1 for demodulating a video signal received as an RF signal. An eliminating circuit 2 receives the demodulated signal produced by the demodulating circuit 1 and produces the signal with or without eliminating the image signal. A control circuit 3 controls the operation of the eliminating circuit 2 and includes an AND gate whose one input receives a CLV signal having a high level when a CLV (constant linear velocity) disk is mounted. The other input of the AND gate 4 receives a loop control signal having a high level when a tracking servo loop for the pickup is opened. The CLV signal and the loop control signal are supplied by a control device such as a microcomputer (not shown).

Fig. 3 shows an eliminating circuit 2 embodying the present invention. The output signal of the demodulating circuit 1 is supplied through an input buffer amplifier 11 to a clamp circuit 12 and then to an output buffer amplifier 13. The clamp circuit 12 is a series circuit comprising a resistor 14 connected in series between the buffer amplifiers 11 and 13, a diode 15 connected between the input terminal of the buffer amplifier 13 and ground, a switch 16 and a power supply 17 in the connection to ground.

The operation of the disk player will now be described. Assuming that a CLV disk is mounted and being replayed, the control device detects the type of the disk and supplies the CLV signal at a high level to one input terminal of the AND gate 4. On receiving a scanning command, the control device moves the pickup in the radial direction of the disk at high speed and repeats the operation of opening and closing the tracking servo loop at fixed intervals of time and supplies to the other input terminal of the AND gate 4 a signal at a low level (a second condition signal) when the tracking servo loop is closed and a signal at a high level when the loop is opened (Fig. 2(c)). Consequently, the output of the AND gate 4 is at a low level when the tracking servo loop is closed and inhibits the eliminating operation of the eliminating circuit 2. Thus, the demodulated signal (Fig. 2(a)) supplied by the demodulating circuit 1 is the same as the signal (Fig. 2(d)) supplied to the CRT (not shown). As the pickup is then following the track (the level of a tracking error signal (Fig. 2(b) is low)), a normal playback picture place is obtained and no noise appears thereon.

On the other hand, the output of the AND gate 4 is at a high level when the tracking servo loop is opened (so as to disregard the large tracking error signal in Fig. 2(b)) and the eliminating circuit 2 operates so as to eliminate the image signal from the received video signal and outputs an image-free signal.

When the eliminating circuit 2 is so arranged as shown in Fig. 3, the switch 16 is turned off in the portion of a horizontal synchronizing signal and is turned on in the portion of the image signal on receiving the control signal supplied by the control device while the AND gate 4 is producing the signal at a high level. When the switch 16 is off, the video signal (horizontal synchronizing signal) supplied to the input buffer amplifier 11 is left unchanged and supplied through the resistor 14 to the output buffer amplifier 13. When the switch is on, the diode 15 conducts and the potential of the buffer amplifier 13 is clamped at a potential which is the sum $(V_1 + V_2)$, where the potential $V_1$ is the potential of the power supply 17 and the voltage $V_2$ is the forward voltage of the diode 15. The image signal is clamped at a black level as shown by a broken line of Fig. 4 and is practically eliminated. Thereby the input-signal of the eliminating circuit 2 shown in Fig. 2(a) produces an output signal shown in Fig. 2(d). A black image is thus displayed on the picture plane and no noise appears which would spoil the view.

When a CAV (Constant Rotation or Angular Velocity) disk is mounted, the CLV signal is at a low level a first condition signal and the output of the AND gate 4 is also at a low level. The operation of the eliminating circuit 2 is thus always inhibited and the demodulated signal supplied by the demodulating circuit 1 is supplied without being changed. In the case of the CAV disk, which is different from the CLV disk, however, the positions of the horizontal synchronizing pulses on tracks adjacent to each other (each track containing one image signal) are aligned with each other in the form of a radial line. Since the image signals are correlated, the signals will not produce noise spoiling the view. Accordingly, if the image signal left unchanged is supplied rather than being clamped at a black level, it will form a good picture image.

Although it has been arranged that the image signal is clamped at a black level, the signal may be clamped at a level of another color such as white or gray as long as it is clamped at a level of fixed color.

The disk player performs special playback by moving a playback head in the radial direction and causing the playback head to jump over a plurality of tracks according to the present invention. The disk player comprises a demodulating circuit for demodulating a received video signal, an eliminating circuit for selectively eliminating image data contained in the video demodulated signal produced by the demodulating circuit and control means for controlling the eliminating circuit according to the correlation between the image data over the tracks. The invention is characterized in that, at the time of the special playback, the demodulated signal is generated unchanged when the image data on the tracks adjacent to each other are correlated. However, the image data is deleted from the demodulated signal when the image data on adjacent tracks are not correlated. As a result, an image of good quality is obtained by preventing the jumping image signal from appearing on the picture plane in the form of noise. Accordingly, the present invention is particularly effective for a system wherein a fixed color is used for locking purposes during scanning.

## Claims

1. A blanking circuit for a video disk player which performs special playback by moving a head in the radial direction of a video disk and causing the head to jump over a plurality of tracks, the circuit comprising a demodulating circuit (1) for demodulating a received video signal (RF) ; an eliminating circuit (2) for selectively eliminating image data contained in the demodulated video signal (a) produced by the demodulating circuit (1) ; and, control means (14-17) for controlling the eliminating circuit (2) to be inhibited when a first condition signal is applied to said eliminating circuit (2) ; characterised by :

means (4) for producing the first condition signal and thereby causing the eliminating circuit to be inhibited when a CAV disk, in which image data on adjacent tracks of the disk are correlated, is played back according to said special playback, the first condition signal not being produced and the eliminating circuit being activated when playing back a CLV disk, in which image data from adjacent tracks of the disk are not correlated.

2. A blanking circuit according to claim 1, wherein said means for producing the first condition signal distinguishes between a constant angular velocity disk and a constant linear velocity disk.

3. A blanking circuit according to claim 1 or claim 2, wherein the control means inhibits the eliminating means, responsive to a second condition signal indicating closed loop tracking of the head.

4. A blanking circuit according to claim 1, wherein the eliminating means (2) comprises a switch (16) controlled by the control means, connected between a fixed potential (17) and a point on an electrical path between an input (11) and an output (13) of the eliminating means.

5. A blanking circuit according to claim 4, further comprising a diode (15) serially connected with the switch.

6. A method of blanking an image signal recorded on a video disk, comprising demodulating a video signal (RF) containing an image signal ; and, eliminating the image signal from the demodulated video signal in response to a first condition signal ; characterised by :

determining when signals recorded on adjacent tracks of the disk are not correlated and when a head tracing the tracks is not under loop control and producing the first condition signal in response to such determination being made.

7. A method according to claim 6, wherein the determining step further determines the absence of a horizontal synchronization pulse in the demodulated video signal.

## Ansprüche

1. Ein Austastschaltkreis für einen Videoplattenspieler, welcher ein spezielles Abspielen durch Bewegen eines Kopfes in der radialen Richtung einer Videoplatte und durch Bewirken, daß der Kopf über eine Vielzahl von Spuren springt, ausführt, wobei der Schaltkreis einen Demodulationsschaltkreis (1) zum Demodulieren eines empfangenen Videosignales (RF) ; einen Eliminierungsschaltkreis (2) zum selektiven Eliminieren von Bilddaten, die in dem von dem Demodulationsschaltkreis (1) erzeugten demodulierten Videosignal (a) enthalten sind ; und eine Steuereinrichtung (14-17) zum Steuern des Eliminierungsschaltkreises (2), daß er gesperrt ist, wenn ein erstes Bedingungssignal an den Eliminierungsschaltkreis (2) gelegt wird, umfaßt ; **gekennzeichnet durch** eine Einrichtung (4) zum Erzeugen des ersten Bedingungssignales und dadurch Bewirken, daß der Eliminierungsschaltkreis gesperrt ist, wenn eine CAV-Platte, in welcher Bilddaten auf aneinander grenzenden Spuren der Platte in Korrelation gebracht sind, entsprechend dem speziellen Abspielen abgespielt wird, wobei das erste Bedingungssignal nicht erzeugt und der Eliminierungsschaltkreis aktiviert wird, wenn eine CLV-Platte, in welcher Bilddaten auf aneinandergrenzenden Spuren der Platte nicht in Korrelation gebracht sind, abgespielt wird.

2. Ein Austastschaltkreis nach Anspruch 1, wobei die Einrichtung zum Erzeugen des ersten Bedingungssignales zwischen einer Platte für konstante Winkelgeschwindigkeit und einer Platte für konstante Lineargeschwindigkeit unterscheidet.

3. Ein Austastschaltkreis nach Anspruch 1 oder 2, wobei die Steuereinrichtung die Eliminierungseinrichtung in Reaktion auf ein zweites Bedingungssignal, das eine Closed-Loop-Spurführung des Kopfes anzeigt, sperrt.

4. Ein Austastschaltkreis nach Anspruch 1, wobei die Eliminierungseinrichtung (2) einen durch die Steuereinrichtung gesteuerten Schalter (16), der zwischen einem festen Potential (17) und einem Punkt auf einem elektrischen Stromzweig zwischen einem Eingang (11) und einem Ausgang (13) der Eliminierungseinrichtung angeschlossen ist.

5. Ein Austastschaltkreis nach Anspruch 4, der ferner eine Diode (15) umfaßt, die zu dem Schalter in Reihe geschaltet ist.

6. Ein Verfahren zum Austasten eines Bildsignales, das auf einer Videoplatte aufgezeichnet ist, mit den Schritten :

Demodulieren eines Vidiosignales (RF), das ein Bildsignal enthält ; und
Eliminieren des Bildsignales aus dem demodulierten Videosignal in Reaktion auf ein erstes Bedingungssignal ; **gekennzeichnet durch :**
Bestimmen, wo Signale, die auf aneinandergrenzenden Spuren der Platte aufgezeichnet sind, nicht zueinander in Korrelation gebracht sind und wo ein die Spuren verfolgender Kopf nicht unter Regelsteuerung steht, und
Erzeugen des ersten Bedingungssignales in Reaktion darauf, daß eine solche Bestimmung ausgeführt worden ist.

7. Ein Verfahren nach Anspruch 6, wobei der Bestimmungsschritt ferner die Abwesenheit eines Horizontalsynchronisationsimpulses in dem demodulierten Videosignal ermittelt.

## Revendications

1. Circuit de suppression de signal pour un lecteur de disque vidéo qui effectue une lecture spéciale en déplaçant une tête de lecture suivant la direction radiale d'un disque vidéo et en forçant la tête de lecture à franchir une pluralité de pistes, le circuit comprenant un circuit démodulateur (1) pour démoduler un signal vidéo reçu (RF) ; un circuit d'élimination (2) pour éliminer de manière sélective des données d'image contenues dans le signal vidéo démodulé (a) produit par le circuit démodulateur (1) ; et un moyen de commande (14-17) pour commander le circuit d'élimination (2) de manière à ce qu'il soit bloqué lorsqu'un premier signal de condition est appliqué au circuit d'élimination (2) ; caractérisé par :

un moyen (4) pour produire le premier signal de condition et forcer de ce fait le circuit d'élimination à être bloqué lorsqu'un disque CAV, dans lequel des données d'image de pistes adjacentes du disque sont corrélées, est lu selon la lecture spéciale, le premier signal de condition n'étant pas produit et le circuit d'élimination étant activé lors de la lecture d'un disque CLV dans lequel des données d'image qui proviennent de pistes adjacentes du disque ne sont pas corrélées.

2. Circuit de suppression de signal selon la revendication 1, dans lequel le moyen pour produire le premier signal de condition effectue un distingo entre un disque à vitesse angulaire constante et un disque à vitesse linéaire constante.

3. Circuit de suppression de signal selon la revendication 1 ou 2, dans lequel le moyen de commande bloque le moyen d'élimination qui est sensible à un second signal de condition qui indique la fermeture de la boucle d'asservissement de suivi de piste de la tête de lecture.

4. Circuit de suppression de signal selon la revendication 1, dans lequel le moyen d'élimination (2) comprend un commutateur (16) commandé par le moyen de commande, connecté entre un potentiel fixe (17) et un point situé sur un chemin électrique entre une entrée (11) et une sortie (13) du moyen d'élimination.

5. Circuit de suppression de signal selon la revendication 4, comprenant en outre une diode (15) connectée en série avec le commutateur.

6. Procédé de suppression d'un signal d'image enregistrée sur un disque vidéo, ce procédé comprenant la démodulation d'un signal vidéo (RF) qui contient un signal d'image ; et l'élimination du signal d'image du signal vidéo démodulé en réponse à un premier signal de condition ; caractérisé par :

La détermination de la non corrélation de signaux enregistrés sur des pistes adjacentes du disque et du non contrôle par boucle d'asservissement de la tête de lecture qui suit les pistes et la production du premier signal de condition en réponse à cette détermination qui a été faite.

7. Procédé selon la revendication 6, dans lequel l'étape de détermination détermine en outre l'absence d'une impulsion de synchronisation horizontale dans le signal vidéo démodulé.

# FIG. 1

# FIG. 2(a)

# FIG. 2(b)

# FIG. 2(c)

CLOSE          OPEN

# FIG. 2(d)

## FIG. 3

FROM 1 ⟶ ▷ 11 —⟶ ⌇14 —⟶ ▷ 13 ⟶ TO CRT

15 ▽

CONTROL
SIGNAL
( FROM 4 ) ⟶ ⟍ 16

12 ⤳ ⏚ 17

2

## FIG. 4

$V_1 + V_2$

0

## FIG. 5
## PRIOR ART

SEVERAL
HUNDRED
TRACKS

TRACKING ERROR

CLOSE ⟵ OPEN ⟶ CLOSE

7